# EUROPEAN PATENT APPLICATION

(11) **EP 3 837 948 A1**
(43) Date of publication of application: **23.06.2021**
(21) Application number: 20213027.4
(22) Date of filing: 10.12.2020
(51) Int. Cl.: A01D 34/00, A01D 75/18, A01D 75/20, G05D 1/02

(54) **ROBOT AND CONTROL METHOD THEREOF**

(30) Priority: 20.12.2019 KR 20190172335
(71) Applicant: LG Electronics, Inc., Yeongdeungpo-gu Seoul 07336 (KR)
(72) Inventor: SEO, Jeongho, 06772 Seoul (KR)
(74) Representative: Ter Meer Steinmeister & Partner

(57) **Abstract**

The present disclosure provides a robot and a control method thereof. A robot according to the present disclosure includes a rotatable wheel, a cutter configured to cut an external object while the robot is moved by the wheel, a motor configured to rotate the cutter, a transceiver configured to receive GPS information of an external device outside the robot from the electronic device, and a processor configured to rotate the motor, obtain a distance between the robot and an object outside the robot while rotating the motor, and stop the motor based on the distance between the robot and the object. Accordingly, it is possible to protect a user from a danger of a blade and to safely use the robot.

## Description

### [Technical Field]

The present disclosure relates to a robot and a control method thereof, and more particularly, to a robot and a control method thereof for performing a preset operation based on a distance between a robot and a surrounding object.

### [Background Art]

A lawn mower is a device for trimming grass planed in a home yard or a playground. The lawn mower is divided into a household lawn mower and a tractor lawn mower which is used in a wide playground or a wide farm.

Meanwhile, the lawn mower mows the lawn using a blade, and thus, the lawn mower has a risk of using the blade.

### [Disclosure]

### [Technical Problem]

The present disclosure provides a robot and a control method thereof capable of protecting a surrounding object from a blade when a surrounding object approaches the robot having a blade.

### [Technical Solution]

The object is solved by the features of the independent claims. Preferred embodiments are given in the dependent claims.

In an aspect, there is provided a method of controlling a robot including: operating a motor; obtaining location information of an electronic device outside the robot from the electronic device while operating the motor; obtaining a distance between the robot and the electronic device using the location information of the electronic device and/or location information of the robot; and stopping the motor based on the distance between the electronic device and the robot.

In an aspect, there is provided a method of controlling a robot including: operating a motor; obtaining GPS information of an electronic device outside the robot from the electronic device and GPS information of the robot while operating the motor; obtaining a distance between the robot and the electronic device using the GPS information of the electronic device and/or GPS information of the robot; and stopping the motor based on the distance between the electronic device and the robot.

The stopping of the motor may include stopping the motor when the distance between the robot and the electronic device is within a preset threshold value.

The method may further include: obtaining GPS information of the robot, in which the obtaining of the distance between the robot and the electronic device may include using the GPS information of the electronic device and the GPS information of the robot.

The obtaining of the distance between the robot and the electronic device may include using a first ultrasonic wave emitted from the electronic device and a second ultrasonic wave which is reflected in response to the first ultrasonic wave.

The obtaining of the distance between the robot and the electronic device may include using an emission RF signal emitted from the electronic device and a reflective RF signal associated with the emission RF signal.

The obtaining of the distance between the robot and the electronic device may include photographing the electronic device, analyzing an external image obtained by photographing the electronic device, and calculating the distance between the robot and the electronic device based on an analysis result.

The rotating of the motor may include driving the motor in a first mode. Moreover, after the stopping of the motor, the method may further include: updating the distance between the robot and the electronic device; and driving the motor in the first mode when the distance between the robot and the electronic device is the threshold value or more.

In another aspect, there is provided a robot configured to move in an outside space, the robot including: a rotatable wheel; a cutter configured to cut an external object while the robot is moved by the wheel; a motor configured to operate the cutter; a transceiver configured to receive location information of an external device outside the robot from the electronic device; and a processor configured to operate the motor, obtain a distance between the robot and the electronic device using the location information of the electronic device obtained from the transceiver while operating the motor, and stop the motor based on the distance between the robot and the electronic device.

In another aspect, there is provided a robot configured to move in an outside space, the robot including: a rotatable wheel; a cutter configured to cut an external object while the robot is moved by the wheel; a motor configured to operate the cutter; a transceiver configured to receive GPS information of an external device outside the robot from the electronic device; and a processor configured to rotate the motor, obtain a distance between the robot and the electronic device using the GPS information of the electronic device obtained from the transceiver while rotating the motor, and stop the motor based on the distance between the robot and the electronic device.

The processor may stop the motor when the distance between the robot and the electronic device is within a preset threshold value.

The robot may further include: a sensor configured to detect the GPS information of the robot, in which the processor may obtain the distance between the robot and the electronic device using the GPS information of the electronic device and the GPS information of the robot.

The processor may obtain the distance between the robot and the electronic device outside the robot using a first ultrasonic wave emitted from the electronic device and a second ultrasonic wave reflected in response to the first ultrasonic wave.

The processor may obtain the distance between the robot and the electronic device outside the robot using an emission RF signal emitted from the electronic device and a reflective RF signal associated with the emission RF signal.

The robot of claim may further include: a camera, in which the processor may photograph the electronic device using the camera, analyze an external image obtained by photographing the electronic device, and calculate the distance between the robot and the electronic device based on an analysis result.

The processor may drive the motor in a first mode, update the distance between the robot and the electronic device after stopping the motor, and drive the motor in the first mode when the distance between the robot and the electronic device is the threshold value or more.

### [Advantageous Effects]

According to the robot and the control method thereof according to the present disclosure, an active access recognition function for the surrounding object is realized so as to control the motor for driving the blade cutting the lawn or control the operation of the set. Accordingly, it is possible to prevent the user from the danger of the blade and to safely use the robot.

Moreover, according to at least one of the embodiments of the present disclosure, the user directly selects a recognition distance from the surrounding object and the operation mode using the existing sensor without adding a separate sensor in the robot so as to use the robot, and thus, it is possible to use a function suitable for a customer's situation.

### [Description of Drawings]

FIG. 1 is a diagram illustrating a robot according to an embodiment of the present disclosure.
FIG. 2 is a flowchart illustrating a control method of a robot according to an embodiment of the present disclosure.
FIG. 3 is a block diagram illustrating configurations of a robot and an external electronic device according to an embodiment of the present disclosure.
FIG. 4 is a flowchart illustrating a method of controlling the robot illustrated in FIG. 3 according to the embodiment of the present disclosure.
FIG. 5 is a diagram illustrating a process of obtaining location information of the external electronic device according to the control method of the robot illustrated in FIG. 4.
FIG. 6 is a diagram illustrating a process of stopping an operation of a driver according to the control method of the robot illustrated in FIG. 4.
FIG. 7 is a block diagram illustrating configurations of a robot and an external electronic device according to an embodiment of the present disclosure.
FIG. 8 is a diagram illustrating a process in which the robot illustrated in FIG. 7 obtains location information of an animal.
FIG. 9 is a diagram illustrating a process of stopping an operation of a driver according to a distance between the animal illustrated in FIG. 7 and the driver.
FIG. 10 is a diagram illustrating a robot and an external electronic device according to another embodiment of the present disclosure.
FIG. 11 is a flowchart illustrating a control method of the robot illustrated in FIG. 10.
FIG. 12 is a diagram illustrating a process of obtaining location information of the external electronic device according to the control method of the robot illustrated in FIG. 11.
FIG. 13 is a diagram illustrating a process of stopping an operation of a driver according to the control method of the robot illustrated in FIG. 11.
FIG. 14 is a diagram illustrating a robot and an external electronic device according to still another embodiment of the present disclosure.
FIG. 15 is a flowchart illustrating a control method of the robot illustrated in FIG. 14.
FIG. 16 is a diagram illustrating a process of obtaining location information of the external electronic device according to the control method of the robot illustrated in FIG. 15.
FIG. 17 is a diagram illustrating a process of stopping an operation of a driver according to the control method of the robot illustrated in FIG. 15.
FIG. 18 is a robot and a moving body according to another embodiment of the present disclosure.
FIG. 19 is a flowchart illustrating a control method of the robot illustrated in FIG. 18.
FIG. 20 is a diagram illustrating a process of obtaining location information of the external electronic device according to the control method of the robot illustrated in FIG. 19.
FIG. 21 is a diagram illustrating a process of stopping an operation of a driver according to the control method of the robot illustrated in FIG. 19.

### [Best Modes]

Hereinafter, embodiments disclosed in the present disclosure will be described in detail with reference to the accompanying drawings, and the same or similar components are denoted by the same reference numerals, and repeated description thereof will be omitted.

In descriptions of the embodiments of the present disclosure, when an element is "coupled" or "connected" to another element, it should be understood that a third element may be present between the two elements although the element may be directly coupled or connected to another element.

Moreover, in the descriptions of the embodiments of the present disclosure, if a detailed description of known techniques associated with the present disclosure would unnecessarily obscure the gist of the present disclosure, detailed description thereof will be omitted. In addition, the attached drawings are provided for easy understanding of embodiments of the present disclosure and do not limit technical ideas of the disclosure, and the embodiments should be construed as including all modifications, equivalents, and alternatives falling within the scope of the present disclosure.

Meanwhile, the term "disclosure" may be replaced with terms such as a document, a specification, a description.

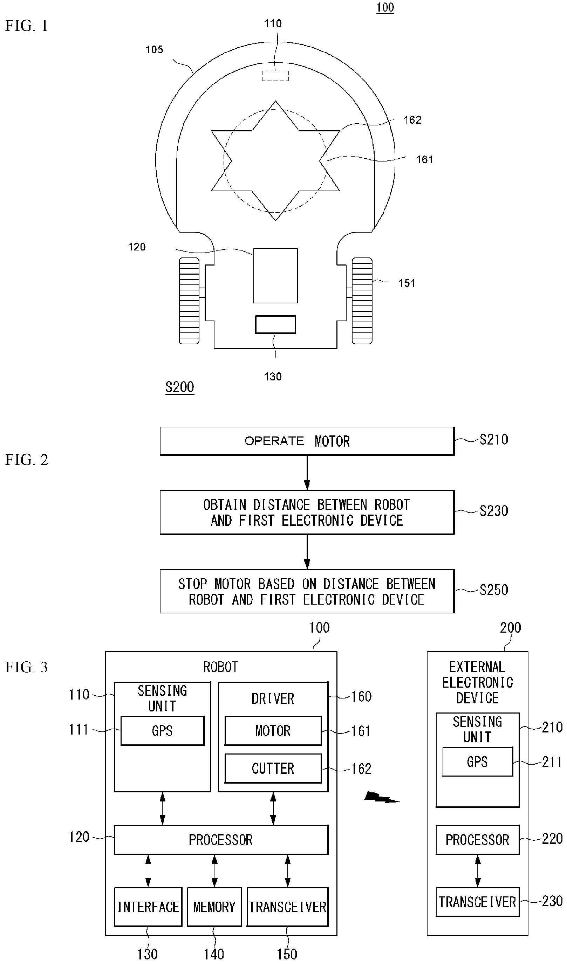

FIG. 1 is a robot 100 according to an embodiment of the present disclosure.

As illustrated in FIG. 1, the robot 100 according to the embodiment of the present disclosure may include a protector 105, a sensing unit 110, a cutter 162, a motor 161, wheels 151, a processor 120 and interface 130.

The protector 105 prevents the cutter 162 from being separated or discharged from the motor 161 due to a malfunction of the cutter 162.

The sensing unit 110 may sense a distance from a surrounding object moved around the robot 100. In addition, the sensing unit 110 may detect location information of the robot 100 itself. For example, the location information of the robot itself may include GPS signal information.

The motor 161 may be coupled to the cutter 162. While the cutter 162 is rotated by the motor 161, the cutter 162 may cut an external cutting object (for example, lawn). Here, the cutter 162 may be in the form of a blade. For example, the cutter 162 may have a blade shape having six corners as illustrated in FIG. 1, but is not necessarily limited thereto.

The interface 130 may obtain a user's input from the outside, and may transmit a signal associated with the obtained user's input to the processor 120. In addition, the interface 130 may output a UI for selecting an operation mode of the robot according to the control of the processor 120.

The processor 120 may control at least one of the sensing unit 121, the cutter 162, the motor 161, the wheels 151, and the interface 130 described above. For example, the processor 120 may drive the wheels 151 to move the robot 100. For example, the processor 120 may control the operation of the motor 161 and/or the cutter 162 based on location information of the surrounding object and/or distance information of the surrounding object. That is, when the surrounding object is moved within a predetermined distance from the robot 100, the processor 120 may stop the operation of the motor 161.

FIG. 2 is a flowchart illustrating a control method of a robot according to an embodiment of the present disclosure.

As illustrated in FIG. 2, a robot (for example, the robot 100 of FIG. 1) according to an embodiment of the present disclosure may performs Steps S210 to S250 to control the robot, and detailed descriptions are as follows.

First, the robot operates the motor provided in the robot (S210). Specifically, the robot may rotate/drive the axis of the motor provided in the robot and thereby the cutter coupled to the motor is rotated.

Subsequently, the robot may obtain a distance between the robot and a first electronic device (surrounding object). For example, the first electronic device may be one example of a surrounding object having a form of an electronic device moving around the robot. For example, the first electronic device may receive a GPS signal and/or transmit the GPS signal (location information) of the first electronic device to the robot using a transceiver provided in the first electronic device. That is, the robot obtains the GPS information (location information) of the first electronic device, obtains the GPS signal (location information) of the robot, and obtains a distance between the first electronic device and the robot using the GPS signal of the first electronic device and the GPS signal of the robot.

Next, the robot stops the motor based on the distance between the first electronic device and the robot (S250). For example, when the first electronic device is moved or the robot is moved and the distance between the first electronic device and the robot is within a preset distance, the robot may stop the rotation of the motor which is being driven.

FIG. 3 is a block diagram illustrating configurations of a robot and an external electronic device according to an embodiment of the present disclosure.

As illustrated in FIG. 3, according to the embodiment of the present disclosure, the robot 100 may include a sensing unit 110, a drive 160, a processor 120, an interface 130, a memory 140, and a transceiver 150.

Here, the sensing unit 110 may include the sensing unit 110 described with reference to FIG. 1. In addition, the driver 160 may include at least one of the motor 161 and the cutter 162 described with reference to FIG. 1. The processor 120 may include the processor 120 described with reference to FIG. 1. Here, the interface 130 may include the interface 130 described with reference to FIG. 1. In addition, the transceiver 150 may be a portion of the processor 120 described with reference to FIG. 1.

The sensing unit 110 may include at least one sensor. For example, the sensing unit 110 may include a GPS sensor 111 for obtaining the location information of the robot. In addition, the sensing unit 110 may include not only the GPS sensor but also all types of sensors (like radar or lidar) for detecting the location of the robot, and is not necessarily limited to the GPS.

Moreover, the sensing unit 111 may include various types of sensors for detecting the distance between the external electronic device and the robot, and this will be described in detail later.

The driver 160 may include a motor 161 and a cutter 162. The motor 161 may include the motor 161 described with reference to FIG. 1, and the cutter 162 may include the cutter 162 described with reference to FIG. 1.

The interface 130 may include a touch screen (not illustrated) for providing a UI while obtaining a user's input. In addition, the present disclosure is not necessarily limited thereto, and the interface may include all types of interfaces for obtaining a user's input and outputting the UI.

The memory 140 may store information associated with an operation mode of the driver 160 based on the control of the processor 120. For example, when the external electronic device 200 moves within a range in which the distance between the robot 100 and the external electronic device 200 is within a preset distance, while the processor 120 stops an operation of the driver 160 which is being driven, the processor 120 may store information associated with a most recent driving mode (or driving set) of the driver just before stopping in the memory 140. In addition, the memory 140 may store a preset reference value of the distance between the external electronic device 200 and the robot 100. The preset distance value between the external electronic device 200 and the robot 100 may be input by the user through the interface 130 or may be set at the time of manufacture by the manufacturer.

The transceiver 150 may obtain a GPS signal (location information) of the external electronic device from the external electronic device 200 based on the control of the processor 120. For example, the transceiver 150 may include at least one of a receiver for receiving data from the outside and a transmitter for transmitting data to the outside. For example, the transceiver 150 may include a transceiver for transmitting and receiving data with the external electronic device 200.

The external electronic device 200 may include a sensing unit 210 which includes a GPS sensor 211. The processor 220 included in the external electronic device 200 may transmit the GPS signal of the external electronic device detected by the GPS sensor 211 to the robot 100 via the transceiver 230.

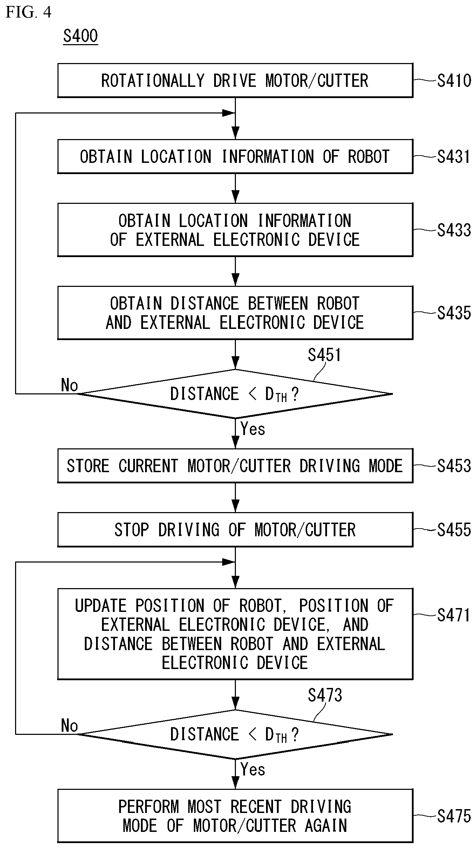

FIG. 4 is a flowchart illustrating a method of controlling the robot illustrated in FIG. 3 according to the embodiment of the present disclosure.

As illustrated in FIG. 4, according to an embodiment of the present discloser, the processor of the robot may perform Steps S410 to S475 to control the robot, and the detailed description is as follows.

First, the processor of the robot may rotationally drive the processor motor and/or the cutter.

Subsequently, the processor may obtain location information of the robot (S431). For example, the processor may obtain the location information of the robot using a GPS signal detected by the GPS sensor of the robot.

Next, the processor may obtain the location information of the electronic device outside the robot, from the external electronic device (S433). For example, the processor may obtain the location information of the external electronic device using the GPS signal of the external electronic device transmitted from the external electronic device.

Subsequently, the processor may obtain the distance between the robot and the external electronic device (S435). For example, the processor may obtain the distance between the robot and the external electronic device using the location information of the robot and the location information of the external electronic device.

Next, the processor may determine whether or not the distance between the robot 100 and the external electronic device 200 is smaller than a preset threshold value (DTH) (S451).

As a result of the determination, when the distance between the robot and the external electronic device is not smaller than the preset threshold value DTH, the processor performs Steps S431 to S435 again.

As the result of the determination, when the distance between the robot and the external electronic device is smaller than the preset threshold value DTH, the processor may store the driving mode of the currently driven motor/cutter (driver) in the memory (S453).

Subsequently, the processor may stop the driving of the motor/cutter (driver) (S455).

In a state in which the driving of the motor/cutter (driver) is stopped, the processor may update the location of the robot, the location of the external electronic device, and the distance between the robot and the external electronic device in real time (S471).

Subsequently, the processor may determine whether or not the distance between the robot and the external electronic device is greater than a preset threshold value DTH (S473).

As a result of the determination, when the distance between the robot and the external electronic device is not greater than the preset threshold value DTH, the processor performs Step S471 again.

As the result of the determination, when the distance between the robot and the external electronic device is greater than the preset threshold value DTH, the processor may perform the most recent driving mode of the motor/cutter (driver) again (S475).

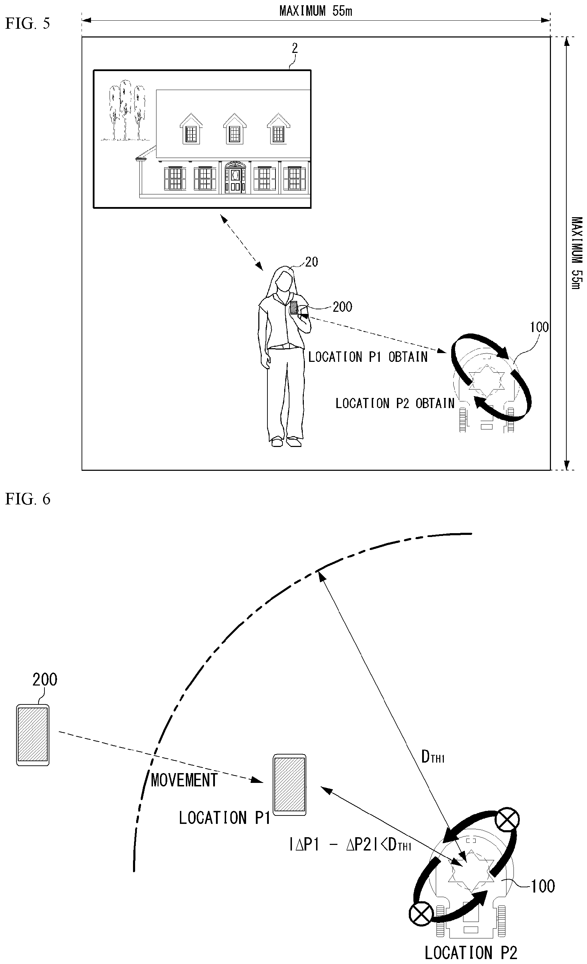

FIG. 5 is a diagram illustrating a process of obtaining the location information of the external electronic device according to the control method of the robot illustrated in FIG. 4.

As illustrate in FIG. 5, when a user 20 carrying the external electronic device 200 exits from an indoor 2 to an outdoor space, the external electronic device 200 starts to receive a GPS signal.

When the external electronic device 200 starts to receive the GPS signal, the external electronic device 200 may transmit the GPS signal of the external electronic device to the robot 100 in operation.

The robot 100 may obtain a location information P1 of the external electronic device using the GPS signal of the external electronic device.

In addition, the robot 100 may obtain the GPS signal of the robot using the GPS in the robot, and obtain a location information P2 of the robot using the GPS signal of the robot.

FIG. 6 is a diagram illustrating a process of stopping the operation of the driver according to the control method of the robot illustrated in FIG. 4.

As illustrated in FIG. 6, the robot may check that the external electronic device 200 moves and a distance between the external electronic device 200 and the robot 100 is smaller than a threshold value DTH1.

Accordingly, when the distance between the robot 100 and the external electronic device 200 is smaller than the threshold value DTH1, the robot may stop the operation of the driver which is being driven.

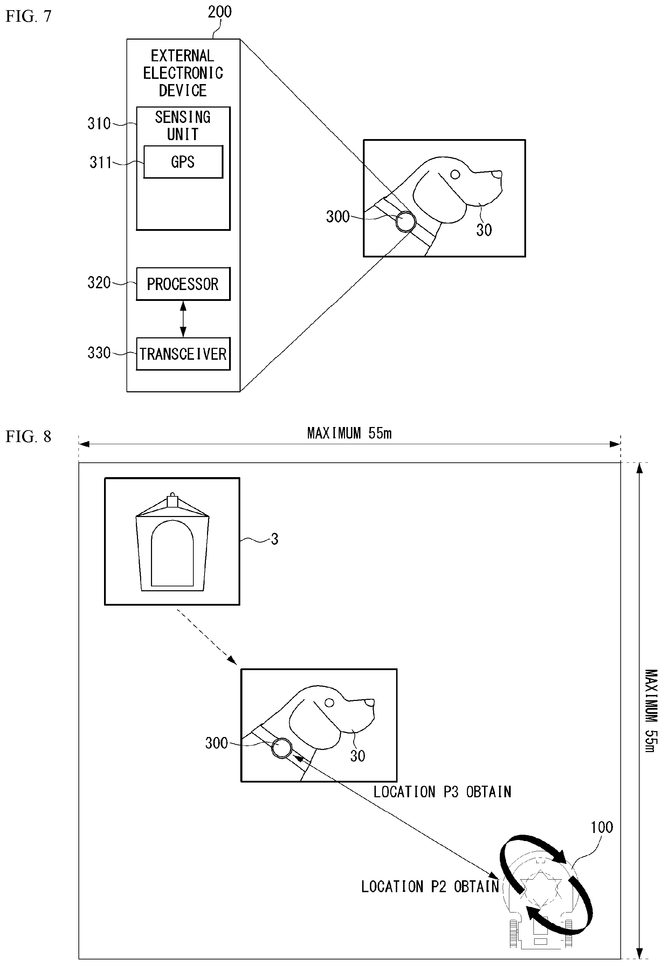

FIG. 7 is a block diagram illustrating configurations of a robot and an external electronic device according to an embodiment of the present disclosure.

As illustrated in FIG. 7, according to an embodiment of the present disclosure, the external electronic device 300 may be to be worn on a portion (that is, a neck) of a body of an animal 30.

The external electronic device 300 may include a sensing unit 310 which includes a GPS sensor 311. The GPS sensor 311 may receive the GPS signal of the external electronic device which is worn on the animal 30, and the received GPS signal may be transmitted to a processor 320 of the external electronic device.

The processor 320 included in the external electronic device may transmit the GPS signal of the external electronic device detected by the GPS sensor 311 to the robot 100 through the transceiver 330.

FIG. 8 is a diagram illustrating a process in which the robot illustrated in FIG. 7 obtains location information of the animal.

As illustrated in FIG. 8, when the animal 30 wearing the external electronic device 300 exits from an inside 3 to an outside space, the external electronic device 300 starts to receive a GPS signal. If the external electronic device 300 starts to receive the GPS signal, the external electronic device 300 may transmit the GPS signal of the external electronic device to the robot 100 in operation.

The robot 100 may obtain a location information P3 of the external electronic device using the GPS signal of the external electronic device. In addition, the robot 100 may obtain the GPS signal of the robot using the GPS in the robot, and obtain the location P2 of the robot using the GPS signal of the robot.

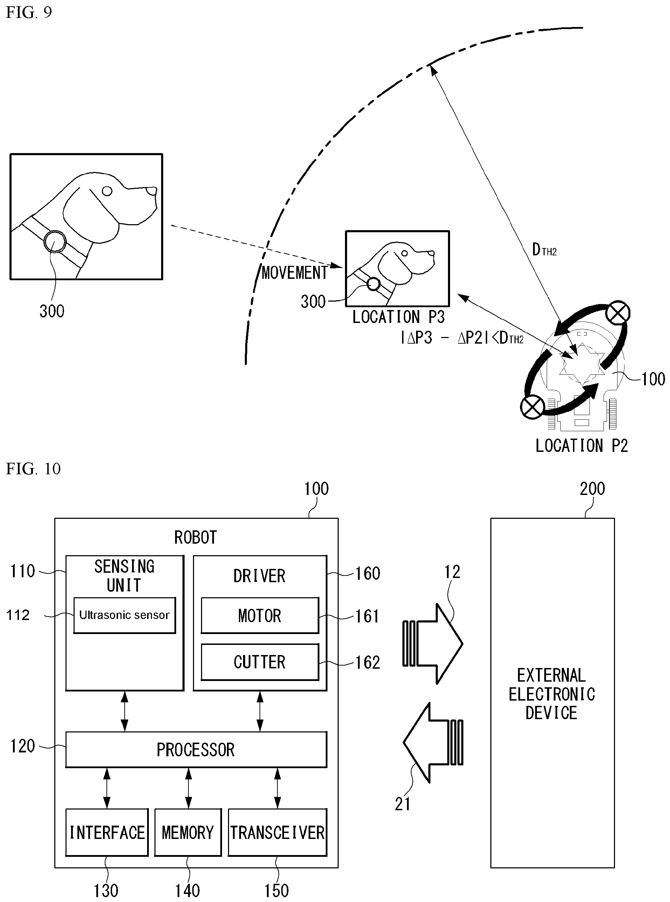

FIG. 9 is a diagram illustrating a process of stopping an operation of the driver according to a distance between the animal illustrated in FIG. 7 and the driver.

As illustrated in FIG. 9, the robot may determine that the external electronic device 300 worn by the animal is moved and the distance between the robot 100 and the external electronic device 300 is smaller than the threshold value DTH2.

In this way, when the distance between the robot 100 and the external electronic device 300 is smaller than the threshold value DTH2, the robot may stop the operation of the driver which is being driven.

FIG. 10 is a diagram illustrating a robot and an external electronic device according to another embodiment of the present disclosure.

As illustrated in FIG. 10, according to another embodiment of the present disclosure, the robot 100 may include the sensing unit 110 having an ultrasonic wave sensor 112. The ultrasonic wave sensor 112 may emit ultrasonic wave 12 to an external electronic device 200, obtain a reflective ultrasonic wave 21 for the emitted ultrasonic wave, and transmit information associated with arrival times of the emitted ultrasonic wave and the reflected ultrasonic wave to the processor 120.

An operation of the driver 160 is the same as described with reference to FIG. 3, and thus, descriptions of the operation are omitted.

The processor 120 may obtain the distance between the external electronic device 200 and the robot 100 based on the information associated with the arrival times of the emitted ultrasonic wave and the reflected ultrasonic wave transmitted from the ultrasonic wave sensor 112.

Operations of the interface 130 and the memory 140 are the same as described with reference to FIG. 3, and thus, descriptions of the operations are omitted.

The transceiver 150 may perform data communication with the external electronic device 200.

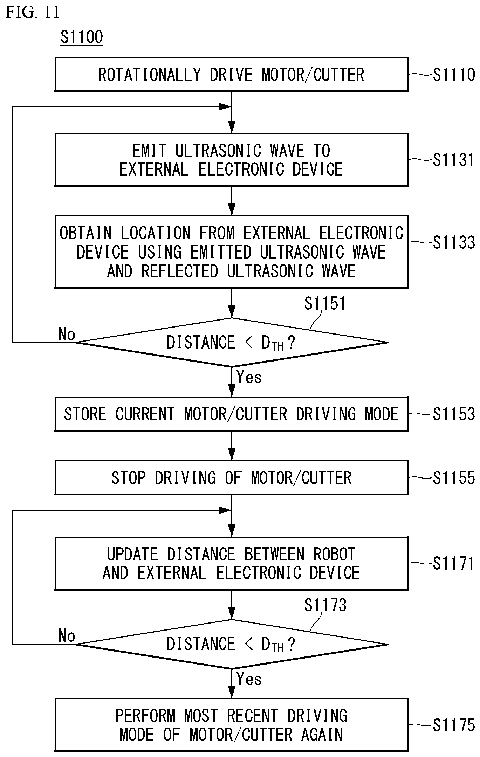

FIG. 11 is a flowchart illustrating a control method of the robot illustrated in FIG. 10.

As illustrated in FIG. 11, first, the processor of the robot may rotationally drive the motor/cutter (driver) (S1110).

Subsequently, the processor may emit an ultrasonic wave to an external electronic device using an ultrasonic wave sensor (S1131).

Next, the processor may obtain the distance between the external electronic device and the robot using the emitted ultrasonic wave and the reflected ultrasonic wave (S1133).

Subsequently, the processor may determine whether or not the distance between the external electronic device and the robot is smaller than the threshold value DTH.

As a result of the determination, when the distance between the robot and the external electronic device is not smaller than the preset threshold value DTH, the processor performs Steps S1131 to S1133 again.

As the result of the determination, when the distance between the robot and the external electronic device is smaller than the preset threshold value DTH, the processor may store the driving mode of the current driving motor/cutter (driver) in the memory (S1153).

Subsequently, the processor may stop the driving of the motor/cutter (driver) (S1155).

Next, the processor updates the location of the robot, the location of the external electronic device, and the distance between the robot and the external electronic device in real time (S1171).

Subsequently, the processor may determine whether or not the distance between the robot and the external electronic device is greater than the preset threshold value DTH (S1173).

As a result of the determination, when the distance between the robot and the external electronic device is not greater than the preset threshold value DTH, the processor performs Step S1171 again.

As the result of the determination, when the distance between the robot and the external electronic device is greater than the preset threshold value DTH, the processor may perform the most recent driving mode of the motor/cutter (driver) again.

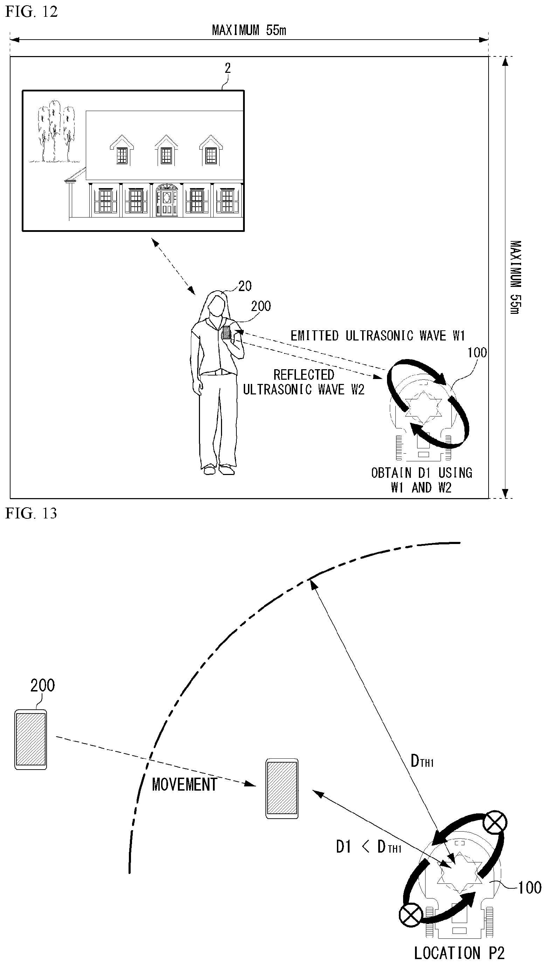

FIG. 12 is a diagram illustrating a process of obtaining the location information of the external electronic device according to the control method of the robot illustrated in FIG. 11.

As illustrate in FIG. 12, when the user 20 carrying the external electronic device 200 exits from the indoor 2 to an outdoor space, the robot may emit ultrasonic wave W1 to the external electronic device.

Subsequently, the robot 100 may obtain ultrasonic wave W2 that is reflected in response to the emitted ultrasonic wave.

The processor of the robot 100 may obtain distance information D1 between the external electronic device 200 and the robot 100 using arrival times of the emitted ultrasonic wave and the reflected ultrasonic wave.

FIG. 13 is a diagram illustrating a process of stopping the operation of the driver according to the control method of the robot illustrated in FIG. 11.

As illustrated in FIG. 13, the robot may check that the external electronic device 200 moves and the distance between the external electronic device 200 and the robot 100 is smaller than the threshold value DTH1.

Accordingly, when the distance between the robot 100 and the external electronic device 200 is smaller than the threshold value DTH1, the robot may stop the operation of the driver (motor/cuter) which is being driven.

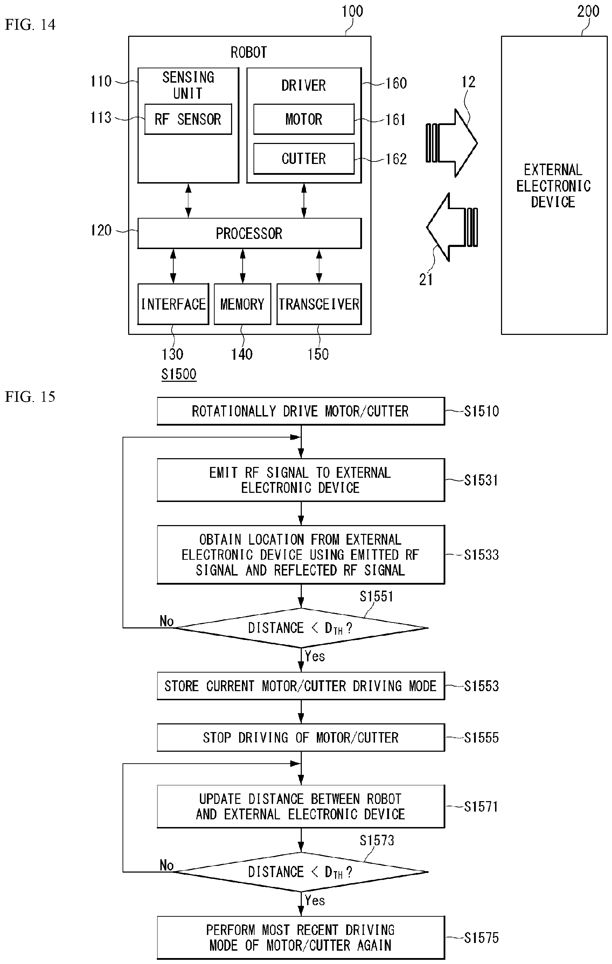

FIG. 14 is a diagram illustrating a robot and an external electronic device according to still another embodiment of the present disclosure.

As illustrated in FIG. 14, according to still another embodiment of the present disclosure, the robot 100 may include the sensing unit 110 having an RF sensor 113. The RF sensor 113 may emit an RF signal 12 to the external electronic device 200 and obtain the reflective RF 21 corresponding to the emitted RF signal. Here, the processor may transmit information associated with arrival times of the emitted RF signal and the reflected RF signal to the processor 120.

The processor 120 may obtain the distance between the external electronic device 200 and the robot 100 based on the information associated with the arrival times of the emitted RF signal and the reflected RF signal transmitted from the sensing unit 110.

Operations of the drive, the interface 130, and the memory 140 are the same as described with reference to FIG. 3, and thus, descriptions of the operations are omitted.

The transceiver 150 may perform data communication with the external electronic device 200.

FIG. 15 is a flowchart illustrating a control method of the robot illustrated in FIG. 14.

As illustrated in FIG. 15, first, the processor of the robot may rotationally drive the motor/cutter (driver) (S1510).

Subsequently, the processor may emit the RF signal to the external electronic device using the RF sensor (S1531).

Next, the processor may obtain the distance between the external electronic device and the robot using the emitted RF signal and the reflected RF signal (S1533).

Subsequently, the processor may determine whether or not the distance between the external electronic device and the robot is smaller than the threshold value DTH (S1551).

As a result of the determination, when the distance between the robot and the external electronic device is not smaller than the preset threshold value DTH, the processor performs Steps S1531 to S1533 again.

As the result of the determination, when the distance between the robot and the external electronic device is smaller than the preset threshold value DTH, the processor may store the driving mode of the current driving motor/cutter (driver) in the memory (S1553).

Subsequently, the processor may stop the driving of the motor/cutter (driver) (S1555).

Next, the processor updates the location of the robot, the location of the external electronic device, and the distance between the robot and the external electronic device in real time (S1571).

Subsequently, the processor may determine whether or not the distance between the robot and the external electronic device is greater than a preset threshold value DTH (S1573).

As a result of the determination, when the distance between the robot and the external electronic device is not greater than the preset threshold value DTH, the processor performs Step S1571 again.

As the result of the determination, when the distance between the robot and the external electronic device is greater than the preset threshold value DTH, the processor may perform the most recent driving mode of the motor/cutter (driver) again (S1575).

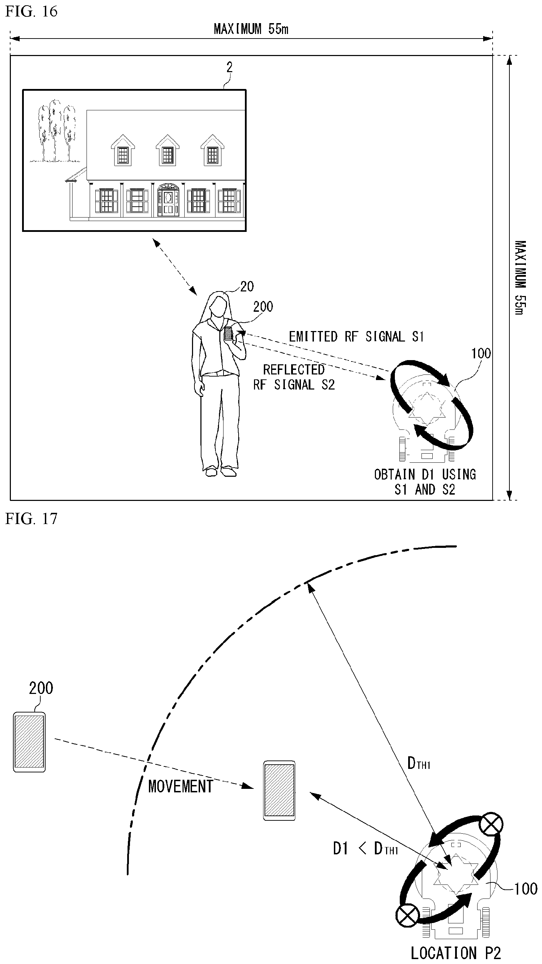

FIG. 16 is a diagram illustrating a process of obtaining the location information of the external electronic device according to the control method of the robot illustrated in FIG. 15.

As illustrate in FIG. 16, when the user 20 carrying the external electronic device 200 exits from the indoor 2 to the outdoor space, the robot 100 may emit an RF signal S1 to the external electronic device.

Subsequently, the robot 100 may obtain an RF signal S2 reflected in response to the emitted RF signal.

The processor of the robot 100 may obtain a distance D1 between the external electronic device 200 and the robot 100 using arrival times of the emitted RF signal S1 and the reflected RF signal S2.

FIG. 17 is a diagram illustrating a process of stopping the operation of the driver according to the control method of the robot illustrated in FIG. 15.

As illustrated in FIG. 17, the robot may check that the external electronic device 200 moves and the distance between the external electronic device 200 and the robot 100 is smaller than the threshold value DTH1.

Accordingly, when the distance between the robot 100 and the external electronic device 200 is smaller than the threshold value DTH1, the robot may stop the operation of the driver (motor/cutter) which is being driven.

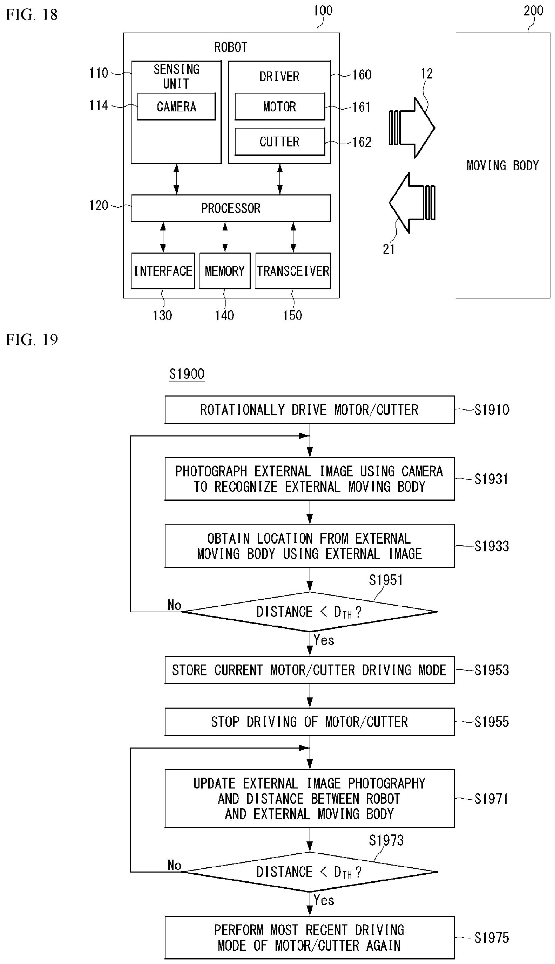

FIG. 18 is a robot and a moving body according to another embodiment of the present disclosure.

As illustrated in FIG. 18, according to another embodiment of the present disclosure, the robot 100 may include a sensing unit 110 having a camera 114. The camera 114 may photograph an external image including a moving body 200 and transmit the photographed external image to the processor 120.

The processor 120 may obtain the distance between the external electronic device 200 and the robot 100 based on the external image transmitted from the sensing unit 110. For example, the processor may determine the distance between the moving body and the robot included in the external image through an image processing analysis technique for the external image.

Operations of the drive, the interface 130, and the memory 140 are the same as described with reference to FIG. 3, and thus, descriptions of the operations are omitted. The transceiver 150 may perform data communication with the moving body 200.

FIG. 19 is a flowchart illustrating a control method of the robot illustrated in FIG. 18.

As illustrated in FIG. 19, first, the processor of the robot may rotationally drive the motor/cutter (driver) (S1910).

Subsequently, the processor may photograph the external image using the camera of the robot to recognize the moving body (S1931).

Next, the processor may obtain the distance between the external moving body and the robot using the external image photographing the moving body (S1933).

Subsequently, the processor may determine whether or not the distance between the external electronic device and the robot is smaller than the threshold value DTH (S1951).

As a result of the determination, when the distance between the robot and the external electronic device is not smaller than the preset threshold value DTH, the processor performs Steps S1931 to S1933 again.

As the result of the determination, when the distance between the robot and the external electronic device is smaller than the preset threshold value DTH, the processor may store the driving mode of the current driving motor/cutter (driver) in the memory (S1953).

Subsequently, the processor may stop the driving of the motor/cutter (driver) (S1155).

Next, the processor photographs the external image every preset period and updates the distance between the robot and the external moving body using the photographed image (S1971).

Subsequently, the processor may determine whether or not the distance between the robot and the external electronic device is greater than a preset threshold value DTH (S1973).

As a result of the determination, when the distance between the robot and the external electronic device is not greater than the preset threshold value DTH, the processor performs Step S1971 again.

As the result of the determination, when the distance between the robot and the external electronic device is greater than the preset threshold value DTH, the processor may perform the most recent driving mode of the motor/cutter (driver) again (S1975).

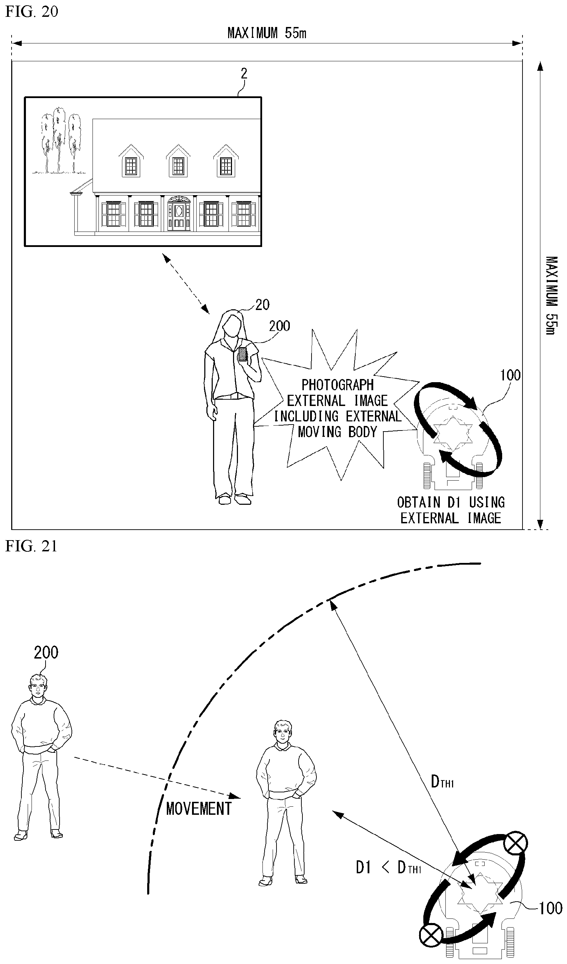

FIG. 20 is a diagram illustrating a process of obtaining location information of the external electronic device according to the control method of the robot illustrated in FIG. 19.

As illustrate in FIG. 20, when the moving body (person) 200 exits from the indoor 2 to the outdoor space, the robot 100 may photograph the external image including the external moving body.

Subsequently, the processor may analyze the external image through an image processing technique and obtain the distance D1 between the external moving body and the robot in the external image based on the analysis result.

FIG. 21 is a diagram illustrating a process of stopping an operation of a driver according to the control method of the robot illustrated in FIG. 19.

As illustrated in FIG. 21, the robot may check that the external moving body 200 moves and the distance between the external moving body 200 and the robot 100 is smaller than the threshold value DTH1.

Accordingly, when the distance between the robot 100 and the external electronic device 200 is smaller than the threshold value DTH1, the robot may stop the operation of the driver (motor/cutter) which is being driven.

Certain embodiments or other embodiments of the present disclosure described above are not mutually exclusive or distinct from one another. Respective configurations or functions of certain embodiments or other embodiments of the present disclosure described above can be used together or combined with each other.

For example, it is understood that an A configuration described in certain embodiments and/or drawings and a B configuration described in other embodiments and/or drawings may be combined with each other. That is, even when a combination between configurations is not described directly, it means that the combination is possible except when it is described that the combination is impossible.

The foregoing detailed description should not be construed as limiting in all aspects, but should be considered as illustrative. The scope of the present disclosure should be determined by reasonable interpretation of the appended claims, and all changes within the equivalent scope of the present disclosure are included in the scope of the present disclosure.

## Claims

1. A method of controlling a robot (100), comprising:
operating (S210) a motor (161);
obtaining location information of an electronic device (200) outside the robot (100) from the electronic device (200) while operating the motor (161);
obtaining (S230) a distance (D) between the robot (100) and the electronic device (200) using the location information of the electronic device (200); and
stopping (S250) the motor (161) based on the distance (D) between the electronic device (200) and the robot (100).

2. The method of claim 1, wherein the stopping (S250) of the motor (161) includes stopping the motor (161) when the distance (D) between the robot (100) and the electronic device (200) is within a preset threshold value (D_{TH}).

3. The method of claim 1 or 2, further comprising:
obtaining location information of the robot (100),
wherein the obtaining of the distance (D) between the robot (100) and the electronic device (200) includes using the location information of the electronic device (2009 and the location information of the robot (100).

4. The method of any one the preceding claims, wherein the distance (D) between the robot (100) and the external electronic device (200) is obtained based on at least one of:
- a GPS signal received from the external electronic device (200) and a GPS signal of the robot (100);
- a first ultrasonic wave (12) emitted from the external electronic device (200) and a second ultrasonic wave (21) reflected in response to the first ultrasonic wave (12);
- an emission RF signal (12) emitted from the external electronic device (200) and a reflective RF signal (21) associated with the emission RF signal, and/or
- image of the external electronic device (200) photographed by a camera (114) of the robot (100), wherein the image is analyzed and the distance (D) between the robot (100) and the external electronic device (200) is calculated based on an analysis result.

5. The method of any one the preceding claims, wherein the operation of the motor (161) includes driving the motor (161) in a first mode, after the stopping of the motor (161), the method further comprising:
updating the distance (D) between the robot (100) and the external electronic device (200); and
driving the motor (161) in the first mode when the distance (D) between the robot (100) and the external electronic device (200) is the threshold value or more.

6. A robot (100) configured to move in an outside space, the robot (100) comprising:
a rotatable wheel (151);
a cutter (162) configured to cut an external object while the robot (100) is moved by the wheel (151);
a motor (161) configured to operate the cutter (161);
a transceiver (150) configured to receive location information of an external electronic device (200) outside the robot (100) from the external electronic device (200); and
a processor (120) configured to operate the motor (161), obtain a distance (D) between the robot (100) and the external electronic device (200) using the location information of the external electronic device (200) obtained from the transceiver (150) while operating the motor (161), and stop the motor (161) based on the distance (D) between the robot (100) and the external electronic device (200).

7. The robot of claim 6, wherein the processor (120) is configured to stop the motor (161) when the distance (D) between the robot (100) and the external electronic device (200) is within a preset threshold value (D_{TH}).

8. The robot of claim 6 or 7, further comprising a sensor (111, 112, 113, 114) configured to detect the location information of the robot (100), wherein the processor (120) is configured to obtain the distance (D) between the robot (100) and the external electronic device (200) using the location information of the external electronic device (200) and the location information of the robot (100).

9. The robot of any one claims 6, 7 or 8, wherein the sensor (111, 112, 113, 114) of the robot (100) for obtaining the location information is at least one of:
- a GPS sensor (111),
- a ultrasonic wave sensor (112),
- a RF sensor (113); and/or
- a camera (114).

10. The robot of claim 9, wherein the processor (120) is configured to obtain the distance (D) between the robot (100) and the external electronic device (200) outside the robot (100) using a first ultrasonic wave (12) emitted from the external electronic device (200) and a second ultrasonic wave (21) reflected in response to the first ultrasonic wave (12) or using an emission RF signal (12) emitted from the external electronic device (200) and a reflective RF signal (21) associated with the emission RF signal (21).

11. The robot of claim 9, wherein the processor (120) is configured to take an image of the external electronic device (200) using the camera (114), to analyze the image obtained by photographing the external electronic device (200), and to calculate the distance (D) between the robot (100) and the external electronic device (200) based on an analysis result.

12. The robot of any one of the preceding claims, wherein the processor (120) is configured to drive the motor (161) in a first mode, to update the distance (D) between the robot (100) and the external electronic device (200) after stopping the motor (161), and to drive the motor (161) in the first mode when the distance (D) between the robot (100) and the external electronic device (200) is the threshold value or more.

13. The robot of any one of the preceding claims, further comprising at least one of:
an interface (130) configured to obtain a user's input;
a memory (140) configured to store a preset reference value of the distance between the external electronic device (200) and the robot (100) and/or information associated with a most recent driving mode of the robot (100) just before stopping.

14. A system comprising a robot as claimed in any one of the claims 6-13 and an external electronic device (200).

15. The system of claim 14, wherein the external electronic device (200) comprises:
a sensing unit (210) including a GPS sensor (211),
a processor (220) configured to transmit a location information of the external electronic device (200) detected by the GPS sensor (211) to the robot (100).
